# EUROPÄISCHE PATENTSCHRIFT

(11) **EP 1 524 462 B1**
(45) Veröffentlichungstag und Bekanntmachung des Hinweises auf die Patenterteilung: **23.06.2010**
(21) Anmeldenummer: 04105085.7
(22) Anmeldetag: 15.10.2004
(51) Int. Cl.: F16K 31/06

(54) **Druckausgeglichenes Elektromagnetventil**
Pressure balanced electromagnetic valve
Soupape électromagnétique compensée pour pression

(30) Priorität: 16.10.2003 DE 10348171
(43) Veröffentlichungstag der Anmeldung: 20.04.2005
(73) Patentinhaber: Rexroth Mecman GmbH, 30880 Laatzen (DE)
(72) Erfinder: Scharnowski, Gerhard, 30989 Gehrden (DE); Mauentöbben, Reinhard, 30659 Hannover (DE); Meisoll, Dieter, 31319 Sehnde (DE)
(74) Vertreter: Kietzmann, Lutz

(56) Entgegenhaltungen:
- DE-A- 2 835 749
- US-A1- 2003 102 451

## Beschreibung

Die Erfindung betrifft ein Elektromagnet, insbesondere ein Schalt- oder Proportionalmagnet zum Schalten eines vorgesteuerten Druckventils, umfassend ein Gehäuse zur Aufnahme und zum Schutz der weiteren Elektromagnetkomponenten, mindestens eine in dem Gehäuse angeordnete, elektrisch beaufschlagbare Spule zur Erzeugung eines Magnetfeldes, mindestens ein in dem Magnetfeld angeordneten, linear bewegbar, als Stellglied ausgebildeten Anker mit LK:JS zwei axial gegenüberliegenden Ankerflächen und eine mit dem Anker zusammenwirkende Rückstellvorrichtung, wobei der Anker so ausgebildet ist, dass dieser einen Ventilsitz eines mit dem Elektromagneten zusammenwirkenden Druckventils verschließt oder öffnet.

Derartige Elektromagneten kommen üblicherweise als Antriebseinheit von Ventilen zum Einsatz. Beim Einsatz in Ventilen wird allgemein zwischen Schaltmagneten und Proportionalmagneten unterschieden. Insbesondere beim Einsatz in Druckventilen, genauer in Druckregelventilen, welche die Aufgabe haben, den Druck in Druckluftleitungen und - systemen auch bei schwankendem Netz- oder Speisedruck und bei unterschiedlicher Abnahme auf einem konstanten Wert zu halten, werden vorzugsweise Proportionalmagneten eingesetzt. Deshalb kommen gerade auch bei vorgesteuerten Druckregelventilen Proportionalelektromagneten zum Einsatz.

Allgemein sind Elektromagneten zum Einsatz in Ventilen bekannt. Diese Elektromagneten umfassen ein Gehäuse, welches mindestens eine elektrisch beaufschlagbare Spule zur Erzeugung eines Magnetfeldes umgibt, und einen in dem Magnetfeld bewegbar angeordneten Anker der als Stellglied mit einer einen ventilsitzabdichtenden Fläche ausgebildet ist und mindestens einer Rückstellvorrichtung, welche mit dem Anker zusammenwirkt und eine gegen die ventilsitzabdichtende Fläche wirkende Kraft auf den Anker einbringt.

Bei der bekannten Lösung tritt der Nachteil auf, dass die Rückstellvorrichtung so ausgelegt werden muss, dass zu der für die Rückstellung des Stellglieds ohne Druckbeaufschlagung aufzuwendenden Kraft zusätzlich eine durch die Druckbeaufschlagung erforderliche Kraft von der Rückstellvorrichtung aufgebracht werden muss. Somit ist die Feder größer ausgelegt, als dies eigentlich für die Erzeugung einer zu Abdichtung notwendigen Rückstellkraft erforderlich wäre. Die Feder benötigt somit mehr Bauraum, was insgesamt entweder zu größeren Elektromagneten und somit zu größeren Ventilen oder zu einer suboptimalen Ausnutzung des Bauraums führt, wodurch nicht die größtmögliche Ventilnennweite hergestellt werden kann.

Aus der DE 28 357 49 A1 geht ein gattungsgemäßer Elektromagnet eines vorgesteuerten Druckventils hervor. Der Anker ist hier mehrteilig aufgebaut und zwecks Druckausgleich an gegenüberliegenden Ankerflächen mit Speisedruck bzw. Arbeitsdruck beaufschlagt. Zu diesem Zwecke ist ein Arbeitsdruckankerteil von einem hiermit verbundenen Vordruckankerteil umgeben, Das Vordruckankerteil wird beidseits mit Vordruck (Speisedruck) beaufschlagt, wogegen zu beiden Stirnseiten des Arbeitsdruckankerteils Arbeitsdruck anliegt. Dies wird durch jeweils zugeordnete Durchgangsöffnungen erzielt. Die Durchgangsöffnung des Arbeitschuckankerteils verläuft koaxial durch diesen hindurch, wogegen das Vordruckankerteil einer außermittige Längsbohrung als Durchgangsöffnung besitzt. Die Ankerteile sind mit mehreren Bohrungen zu versehen, um die vorstehend beschriebenen Funktionen auszuführen.

Es ist die Aufgabe der vorliegenden Erfindung einen Elektromagneten der vorstehend beschriebenen Art zu schaffen, der eine Druckentlastung des Ankers beziehungsweise des Stellgliedes bewirkt, so dass die Rückstellvorrichtung optimal auslegbar ist und eine optimale Bauraunausnutzung realisierbar ist.

Diese Aufgabe wird ausgehend von einem Elektromagneten gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass der Anker Mittel zum Druckausgleich bei ventilsitzseitig druckbeaufschlagter erster Ankerfläche aufweist, so dass die LK:hv

Rückstellvorrichtung mit einer Kompensationskraft zusammen an einer zweiten, der ersten Ankerfläche entgegengerichteten Ankerfläche wirkt, wodurch die Rückstellvorrichtung nur entsprechend der aufzubringenden Dichtkraft für den Ventilsitz auslegbar ist.

Diese Lösung bietet den Vorteil, dass durch den Druckausgleich ein von einer Seite mit Druck beaufschlagter Anker zusätzlich mit einem entgegengerichteten Gegendruck beaufschlagt wird, wodurch die beiden Drücke entsprechend entgegengesetzt wirken und somit ein Druckausgleich geschaffen ist Hierdurch wirkt alleine die Kraft der Rückstellvorrichtung. Diese Rückstellvorrichtung lässt sich so optimal auf die entsprechenden Anforderungen auslegen und dementsprechend lässt sich auch der Bauraum für die Rückstellvorrichtung, damit des Elektromagneten und schließlich des Ventils oder der entsprechenden Vorrichtung, mit der der Elektromagnet zusammenwirkt, auslegen.

Zudem ändern sich durch die veränderten Kräfteverhältnisse verschiedene Parameter wie zum Beispiel die Ansprechzeit des Ankers, so dass bei Einsatz in einem Regelsystem mit beispielsweise einem Druckregelventil ein stabilerer Regelkreis gegenüber einem Regelkreis mit herkömmlichen Elektromagneten realisiert ist.

Erfindungsgemäß ist ein Anker in dem Elektromagnet zylindrisch ausgebildet mit zwei Stirnflächen, die axial zueinander angeordnet sind. Eine Stirnfläche ist so ausgebildet, dass diese einen Ventilsitz eines mit dem Elektromagneten zusammenwirkenden Ventils schließt.

Die Rückstellvorrichtung kann als Feder-Speicher-Einheit ausgebildet sein und wirkt gegen den ventilseitigen Druck.

Eine weitere, die Erfindung verbessernde Maßnahme sieht vor, dass die Mittel mindestens eine Leitung umfassen, die den ventilseitig an der ersten Ankerfläche anliegenden Druck an eine der ventilseitigen, ersten Ankerfläche entgegenwirkenden zweiten Ankerfläche leitet, so dass ein Gegendruck, der gegen den ventilseitig anliegenden Druck wirkt, realisiert ist. Durch die Weiterleitung des an der ersten Ankerfläche anliegenden Drucks an die zweite Ankerfläche wirkt unabhängig von dem Druckwert auf beiden Ankerseiten im Wesentlichen derselbe Druck. Hierdurch lässt sich auf einfache Weise eine Druckentlastung beziehungsweise ein Druckausgleich realisieren.

Deshalb sieht eine weitere die Erfindung verbessernde Maßnahme vor, dass die mit dem Gegendruck beaufschlagbare zweite Ankerfläche im Wesentlich so ausgebildet ist, dass diese in axialer Richtung eine im Wesentlichen gleichgroße Fläche aufweist, wie die mit dem Druck beaufschlagte, ventilseitige erste Ankerfläche, um den Druckausgleich des Ankers zu realisieren.

Die erste Ankerfläche ist mit einem Druck p₁ beaufschlagt, der auf die erste Ankerfläche mit dem Flächeninhalt oder Flächenquerschnitt A₁ wirkt. Dadurch ergibt sich eine erste Kraft F₁, die ventilseitig auf den Anker beziehungsweise das Stellglied wirkt. Die Kraft F₁ ist in axialer Richtung des Ankers in Richtung zweite Ankerfläche gerichtet.

Die zweite Ankerfläche ist mit einem Druck p₂ beaufschlagt, der auf die zweite Ankerfläche mit dem Flächeninhalt oder Flächenquerschnitt A₂ wirkt. Dadurch ergibt sich eine zweite Kraft F₂, die auf den Anker beziehungsweise das Stellglied wirkt. Die Kraft F₂ ist in axialer Richtung des Ankers entgegengesetzt zur ersten Ankerfläche gerichtet.

Zudem wirkt auf die zweite Ankerfläche axial in Richtung erste Ankerfläche die Rückstellkraft F_{R} der Rückstellvorrichtung. Diese entspricht einer notwendigen Abdichtkraft F_{A} die entgegengesetzt zu F_{R} wirkt.

Somit ergibt sich bei Berücksichtigung der vier vorgenannten Größen für die Kräfte in axialer Richtung das Kräfteverhältnis: F₁ + F_{A}= F₂ + F_{R}.

Wie zuvor beschrieben ergibt sich bei gleichem Druck p = p₁ = p₂ und bei gleichem Flächeninhalt A = A₁ = A₂ der Ankerfläche, dass bei nichtwirkendem Magnetfeld die Abdichtkraft F_{A} ausschließlich von der Rückstellkraft F_{R} der Rückstellvorrichtung bestimmt wird. Eine Einwirkung des Drucks ist somit nicht gegeben.

Eine die Erfindung weiter verbessernde Maßnahme lässt sich dadurch erzielen, dass die Leitung als längs koaxial durch den Anker verlaufende gerade Durchgangsöffnung ausgebildet ist, um den Druckausgleich zu realisieren. Auf diese Weise ist die Leitung in den Anker integriert, wodurch der Elektromagnet klein baut, da kein zusätzlicher Bauraum für ein Leitungssystem benötigt wird. Es wird außerdem kein zusätzliches Material benötigt, was weiterhin den positiven Effekt aufweist, dass der gesamte Elektromagnet leichter baut. Zudem stellt diese Durchgangsöffnung zugleich den kürzesten vorstellbaren Weg zur Realisierung eines erfindungsgemäßen Druckausgleichs dar. Die Durchgangsöffnung ist vorzugsweise als zylindrische Durchgangsbohrung ausgebildet.

Als besonders vorteilhaft hat sich herausgestellt, dass der Anker mindestens zweiteilig ausgebildet ist mit einem axial in dem Magnetfeld bewegbarem Vordruckankerteil und einem das Vordruckankerteil zumindest teilweise umgebenden, axial unbewegbar mit dem Vordruckankerteil verbundenen Arbeitsdruckankerteil, somit keine Relativbewegung zwischen Vordruckankerteil und Arbeitsdruckanker möglich ist, wobei Vordruckankerteil und Arbeitsdruckankerteil jeweils mindestens eine Durchgangsöffnung aufweisen, um den Druckausgleich zu realisieren. Auf diese Weise lässt sich auch bei mehreren auch unterschiedlichen Drücken ein Druckausgleich realisieren, wodurch das Einsatzgebiet des Elektromagneten signifikant erweitert ist. So lässt sich beispielsweise der Elektromagnet bei vorgesteuerten Ventilen einsetzen. Denkbar ist analog, dass der Anker mehrteilig ausgebildet ist, wodurch sich bei gleichem Durchmesser von stimseitigem Ventilsitz am Vordruckankerteil und dem Innendurchmesser des Dichtringes unterschiedlichste Druckbeaufschlagungen entsprechend ausgleichen lassen.

Vordruckankerteil und Arbeitsankerteil sind vorzugsweise aus verschiedenen Materialien hergestellt, wobei das Vordruckankerteil aus unmagnetischem Material hergestellt ist und das Arbeitsdruckankerteil aus magnetisch gut leitendem Material wie zum Beispiel Weicheisen hergestellt ist.

Nach einer möglichen Weiterbildung der Erfindung wird vorgeschlagen, dass das Vordruckankerteil zumindest teilweise in der Durchgangsöffnung zum Druckausgleich des Arbeitsdruckankers axial unbewegbar angeordnet ist. Vorzugsweise ist die Durchgangsöffnung des Arbeitsdruckankers zentrisch angeordnet. Die Durchgangsöffnung kann durch zwei zusätzliche axiale Kanäle im Arbeitsdruckanker oder auch durch einen gewindeähnlichen Kanal im Arbeitsdruckankerteil oder außen auf dem Vordruckankerteil ausgebildet sein. Auch das Spiel zwischen der Führungsbuchse und dem Arbeitsdruckankerteil ließe sich als Leitung für den Arbeitsdruck nutzen, um einen Druckausgleich des Arbeitsdruckankers zu realisieren.

Weiterhin vorteilhaft ist, dass die Rückstellvorrichtung als Druckfeder ausgebildet ist, die in einem zugleich als Druckraum dienenden Freiraum zwischen Gehäuse und Anker angeordnet ist, um eine Federkraft und eine durch den in dem Druckraum herrschenden Gegendruck hervorgerufene Druckkraft auf den Anker zu übertragen. Die Rückstellkraft, die hier als Federkraft ausgebildet ist, bestimmt ausschließlich die Abdichtkraft des Ankers. Dabei wirkt die Federkraft vorzugsweise in axialer Richtung. Die Druckfeder lässt sich platzsparend in dem Freiraum anordnen, so dass ein kleinbauender Elektromagnet realisiert ist. Durch den Druckausgleich ist eine entsprechend klein ausgelegte Feder verwendbar, so dass der Bauraum optimal ausgenutzt ist. Der Durchmesser des Ventilsitzes muss dabei gleich dem Innendurchmesser des Dichtringes auf dem Vordruckankerteil sein.

Eine weitere Aufgabe der vorliegenden Erfindung ist es, ein Druckventil mit optimiertem Bauraum zu schaffen, welches trotz der geringen Abmaße beim Einsatz in einem Regelsystem einen stabilen Regelkreis ermöglicht.

Diese Aufgabe wird ausgehend von einem Druckventil gemäß dem Oberbegriff des Anspruchs in Verbindung mit dessen kennzeichnenden Merkmalen gelöst.

Die Erfindung schließt weiter die technische Lehre ein, dass ein Druckventil, insbesondere ein vorgesteuertes Proportional-Magnetventil mindestens ein erfindungsgemäßen Elektromagneten nach einem der Ansprüche 1 bis 7 umfasst, um ein druckausgeglichenes Druckventil zu realisieren. Mit dem Einsatz eines erfindungsgemäßen Elektromagneten lässt sich ein Druckventil mit optimiertem Bauraum und stabilen Regelkreis realisieren. Insbesondere lässt sich ein Druckregelventil und bevorzugt ein vordruckgesteuertes Druckregelventil realisieren, welches aufgrund des Druckausgleichs ein geringeres Magnetgewicht und damit verbunden einen stabileren Regelkreis aufweist.

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
- Fig. 1: eine Draufsicht eines erfindungsgemäßen Elektromagneten,
- Fig. 2: einen Schnitt A-A des Elektromagneten nach Fig. 1,
- Fig. 3: ein Durchfluss-Kraft-Diagramm, mit der Darstellung des Durchflusses eines Fluids in Abhängigkeit von der vom erfindungsgemäßen Elektromagneten aufzubringenden Kraft und
- Fig. 4: ein Durchfluss-Kraft-Diagramm nach Fig. 3 eines herkömmlichen Ventils,

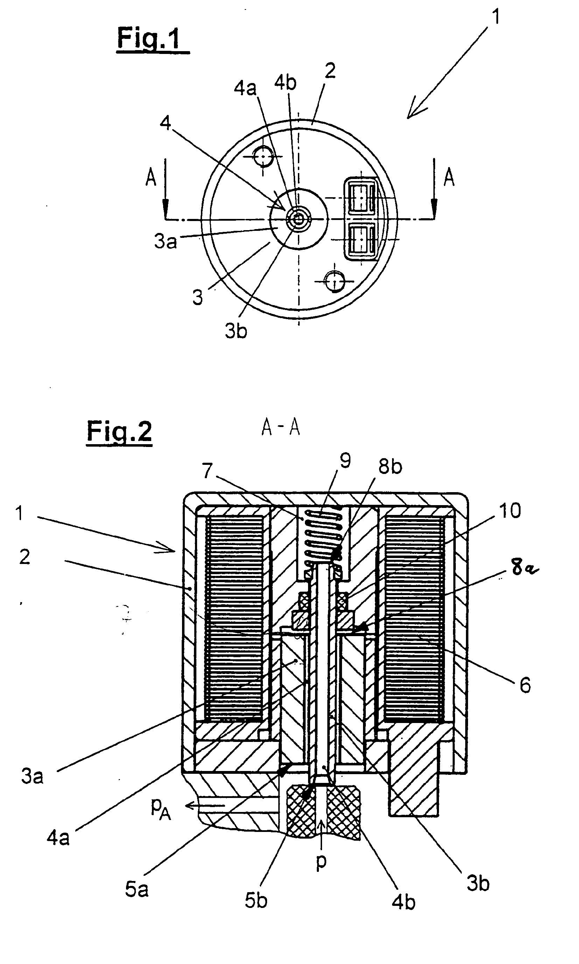

Fig. 1 zeigt eine Draufsicht auf ein erfindungsgemäßen Elektromagnet 1 mit einem die Elektromagnetkomponenten umgebenden Gehäuse 2. Das Elektrogehäuse 2 ist topfförmig ausgebildet mit einem Deckelbereich und einem Wandungsbereich, wobei der Wandungsbereich in axialer Richtung einen ringförmigen Querschnitt aufweist. Es ist auch möglich, die Elektromagnetkomponenten in einem länglichen Gehäuse anzuordnen.
Zentrisch in dem Gehäuse ist ein Anker 3 angeordnet. Der Anker 3 ist entlang der Mittelachse des Elektromagneten 3 linear beziehungsweise axial beweglich angeordnet. In Fig. 1 ist der Anker zweiteilig ausgebildet mit einem Arbeitsdruckankerteil 3a und einem Vordruckankerteil 3b. Der Anker 3 weist Mittel zum Druckausgleich auf, die als Durchgangsöffnung 4 ausgebildet sind. Bei dem hier dargestellten, zweiteilig ausgebildeten Anker 3 weist das Arbeitsdruckankerteil 3a eine erste Durchgangsöffnung 4a und das Vordruckankerteil 3b eine zweite Durchgangsöffnung 4b auf. Die Durchgangsöffnungen 4a, 4b sind zentrisch auf den entsprechenden Ankerteilen 3a, 3b ausgebildet, oder die Durchgangsöffnung 4a ist gewindeförmig außen auf dem entsprechenden Ankerteil 3b eingedreht. Das heißt, die als Kanal ausgebildete Durchgangsöffnung 4a kann auch gewindeförmig oder als parallel zu der als Bohrung ausgebildeten Durchgangsöffnung 4b ausgebildet sein. Das Vordruckankerteil 3b ist axial unbeweglich in der ersten Durchgangsöffnung 4a angeordnet. Weiterhin ist in Fig. 1 eine Schnittlinie A―A dargestellt. Die Schnittansicht ist in der folgenden Fig. 2 dargestellt.

Fig. 2 zeigt den Schnitt A―A des in Fig. 1 dargestellten Elektromagnets 1. Deutlich ist die topfförmige Ausbildung des Gehäuses 2 zu erkennen, wobei die Dicke der Gehäusewandung im Wesentlichen konstant ausgebildet ist. Eine andere Ausbildung, hier nicht dargestellte Ausbildung sieht vor, dass die Elektromagnetkomponenten in einem länglichen Gehäuse angeordnet sind. Innerhalb des Gehäuses sind die beiden Ankerteile 3a, 3b angeordnet. Das Arbeitsdruckankerteil 3a ist ringförmig beziehungsweise rohrförmig mit einem kreisringförmigen Querschnitt, das heißt als Zylinder mit einer zentrischen ersten Durchgangsöffnung 4a ausgebildet. In dieser ersten Durchgangsöffnung 4a ist das Vordruckankerteil 3b angeordnet, welches ebenfalls eine zentrische, zylindrische zweite Durchgangsöffnung 4b aufweist. Die stirnseitig angeordneten erste Ankerfläche 5b ist als Ventilsitz ausgebildet und weist eine dementsprechende Geometrie auf.

Weiter ist in dem Gehäuse 2 eine elektrisch beaufschlagbare Spule 6 angeordnet, welche beim durchfließen mit elektrischem Strom ein Magnetfeld ausbildet. Die Spule 6 umgibt die beiden Ankerteile 3a, 3b, so dass diese innerhalb des durch die Spule 6, bei Beaufschlagung mit elektrischem Strom, gebildeten Magnetfelds angeordnet sind. Das Ankerteil 3a ist aus einem mit dem Magnetfeld zusammenwirkenden Material geformt, so dass die Ankerteile 3a und 3b durch das Magnetfeld bewegbar sind. Um die Bewegung des Arbeitsdruckankerteils 3a zu führen, ist eine Führungsbuchse vorgesehen, die das Arbeitsdruckankerteil 3a umgibt.
Das Vordruckankerteil 3b wird durch das Arbeitsdruckankerteil 3a, welches zylindrisch ausgebildet ist und eine Durchgangsöffnung aufweist. Hierzu ist das Arbeitsdruckankerteil 3a fest mit dem Arbeitsdruckankerteil 3b verbunden, so dass zwischen den beiden Arbeitsdruckankerteilen keine Relativbewegung möglich ist. Das Polstück liegt an der Innenseite des Gehäuses 2, genauer des Deckelbereichs des Gehäuses 2 an und bildet einen Freiraum 7, in den das Vordruckankerteil 3b mit einer zweiten Ankerfläche 8b mündet. In dem Freiraum 7 ist eine als Druckfeder ausgebildete Rückstellvorrichtung 9 angeordnet, die mit dem Vordruckankerteil 3b zusammenwirkt. Die Rückstellvorrichtung 9 liegt an der Innenseite des Deckelbereichs des Gehäuses 2 und an einem Absatz des Vordruckankerteils 3b an und wirkt so auf das Vordruckankerteil 3b. Durch die zweite Durchgangsöffnung 4b, das heißt die Durchgangsöffnung, die längs durch das Vordruckankerteil 3b verläuft, ist der Freiraum 7 und die Rückseite O-Rings 10 mit einem Druck p beaufschlagbar, der dem Druck p entspricht, der seitens des Ventils (nicht dargestellt) auf die erste Ankerfläche 5a und die Querschnittsfläche, welche die zweite Durchgangsöffnung 4b umgibt, wirkt. Somit wirkt auf die erste Ankerfläche 5b und die Querschnittsfläche um die zweite Durchgangsöffnung 4b und die Innendurchmesserfläche des O-Ringes 10 b vom Betrag her der gleiche Druck. Die Ankerfläche 5b, die Querschnittsfläche um die zweite Durchgangsöffnung 4b und die Innendurchmesserfläche des O-Rings 10 sind von ihrem Flächeninhalt gleich ausgebildet, so dass auf die Ankerfläche 5b und die Innendurchmesserfläche des O-Rings 10 vom Betrag die gleiche aber entgegengesetzt gerichtete Druckkraft wirkt.
Analog ist zwischen dem Bauteil zur Führung des Vordruckankerteils 3b und der Führungshülse zur Führung des Arbeitsdruckankerteils 3a ein Freiraum 7 ausgebildet, welcher mit einem ventilseitigen Druck p_{A} durch die erste Durchgangsöffnung 4a längs durch das Arbeitsdruckankerteil 3a beaufschlagbar ist. Das Arbeitsdruckankerteil 3a weist eine zweite Ankerfläche 8a auf, die vom Flächeninhalt der ersten Ankerfläche 5a entspricht. Somit wirkt auf beide Ankerflächen 5a, 8a eine vom Betrag gleiche, aber entgegengesetzt gerichtete Druckkraft. Die beiden Freiräume 7 sind mittels eines Dichtrings voneinander abgedichtet. Das Vordruckankerteil 3b ist über eine nichtmetallische O-Ring-Haltescheibe mit dem Bauteil verbunden.

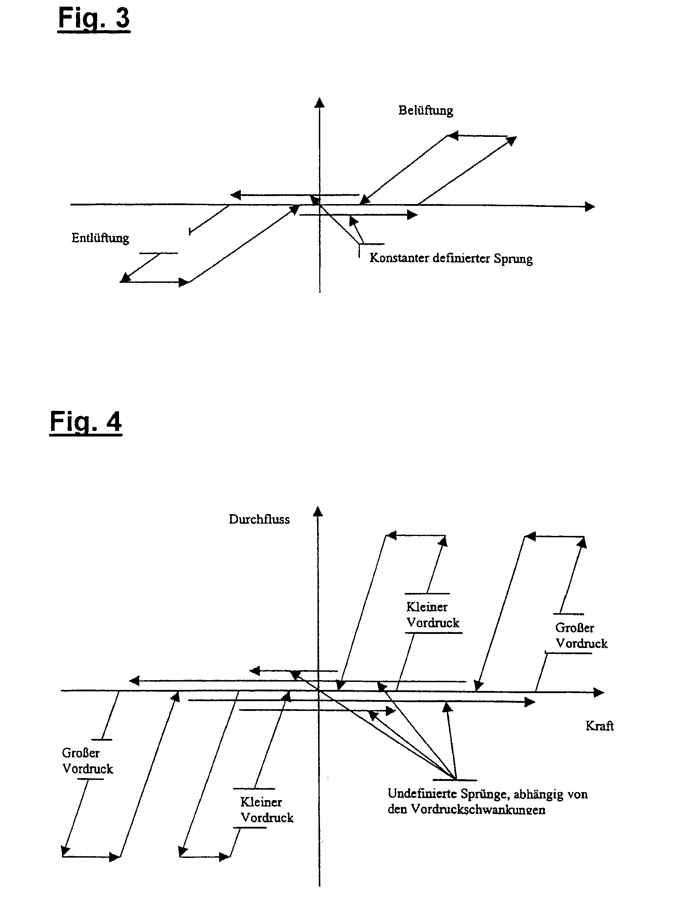

Fig. 3 zeigt ein Durchfluss-Kraft-Diagramm eines erfindungsgemäßen Druckventils. Im Vergleich hierzu zeigt Fig. 4 ein Durchfluss-Kraft-Diagramm eines herkömmlichen Druckventils.
In beiden Fig. 3 und 4 ist ein Kennlinienverlauf beim Betrieb des Druckventils dargestellt. Fig. 3 weist eine Hysterese-Kurve auf, während Fig. 4 zwei horizontal zueinander verschobene Hysterese-Kurven aufweist. Die Kennlinie in Fig. 3 verläuft gegenüber der Kennlinie in Fig. 4 mit einem flacheren Anstieg, wobei der Kennlinienverlauf in etwa einem Parallelogramm entspricht, das heißt nach Art einer Hysterese-Kurve. In Fig. 4 sind dagegen zwei solcher Kurven zu sehen, die beide einen steileren Anstieg aufweisen. Der Unterschied ist darin begründet, dass der Kennlinienverlauf in Fig. 3 aufgrund des Druckausgleichs keine Schwankungen der Schließkräfte aufweist, das heißt die Schließkräfte sind aufgrund des Druckausgleichs bei allen ventilseitigen Drücken konstant. Somit ist bei einem Einsatz in einem Regelkreis ein stabiler Regelkreis ohne Druckschwankungen möglich. Zudem ist die Kraftreserve bei dynamischem Verhalten des Ventils groß, da keine zusätzlichen Kräfte für das sichere Schließen des Ankers auf dem Ventilsitz von der Rückstellvorrichtung aufgebracht werden müssen. Somit sind auch die von dem Elektromagneten aufzubringenden Kräfte zum Öffnen geringer. Aus dem vorgenannten ergibt sich eine insgesamt flachere Kennlinie, die sich besser regeln lässt als eine steilere Kennlinie, da bei einer kleinen Abweichung in einer Richtung des Diagramms die Auswirkungen in der anderen Richtung des Diagramms deutlich geringer sind, als bei steileren Kennlinien. Durch die bessere Regelung lassen sich Störungen oder Aufschwingungen des Systems leichter regulieren, so dass insgesamt ein weniger Störungs- und Schwingungsanfälliges System realisiert ist.

Das in Fig. 4 dargestellte Diagramm, das das Verhalten eines nicht druckentlasteten Systems zeigt weist zwei zueinander verschobene Kurvenverläufe auf. Die Kennlinienverschiebung resultiert aus Vordruckschwankungen so dass ein Kennlinienfeld (siehe Fig. 6) entsteht. Hierdurch resultieren mehrere Arbeitsbereiche.

Weiter weist der Verlauf der Kennlinie einen steileren Anstieg als in Fig. 3 auf, da die zusätzlich aufzubringenden Schließekräfte einen Teil der von der Rückstellvorrichtung aufzubringenden Proportionalkraft beanspruchen. Dadurch sind die für ein dynamisches Verhalten und zum Losbrechen erforderlichen Kraftreserven deutlich kleiner.

### Bezugszeichenliste

- 1: Elektromagnet
- 2: Gehäuse
- 3: Anker
- 3 a: Arbeitsdruckankerteil
- 3 b: Vordruckankerteil
- 4: Durchgangsöffnung
- 4 a: erste Durchgangsöffnung
- 4 b: zweite Durchgangsöffnung
- 5 a: erste Ankerfläche
- 5 b: erste Ankerfläche
- 6: Spule
- 7: Freiraum
- 8 a: zweite Ankerfläche
- 8 b: zweite Ankerfläche
- 9: Druckvorrichtung
- 10: O-Ring

## Patentansprüche

1. Elektromagnet (1) zum Schalten eines vorgesteuerten Druckventils, mit einem Gehäuse (2) zur Aufnahme mindestens einer elektrischen Spule (6) zur Erzeugung eines Magnetfeldes, in welchem ein linear bewegbarer Anker (3) angeordnet ist, der zwei axial gegenüberliegende geteilte Ankerflächen (5a, 5b; 8a, 8b) aufweist, sowie mit einer Rückstellvorrichtung (9) zusammenwirkt, wobei der Anker (3) einen Ventilsitz eines mit dem Elektromagneten (1) zusammenwirkenden Druckventils verschließt oder öffnet, wobei zum Druckausgleich am Anker (3) die Rückstellvorrichtung (9) mit einer Kompensationskraft zusammen an der zweiten Ankerfläche (8a, 8b) wirkt, wozu der Anker (3) mindestens zweiteilig ausgebildet ist mit einem axial in dem Magnetfeld bewegbarem Vordruckankerteil (3b) und einem das Vordruckankerteil (3b) zumindest teilweise umgebenden, axial unbewegbar mit dem Vordruckankerteil (3b) verbundenen Arbeitsdruckankerteil (3a), wobei Vordruckankerteil (3b) und Arbeitsdruckankerteil (3a) jeweils mindestens eine Durchgangsöffnung (4a, 4b) aufweisen,
**dadurch gekennzeichnet,**
**dass** das Vordruckankerteil (3b) zumindest teilweise in der Durchgangsöffnung (4a) zum Druckausgleich des Arbeitsdruckankers (3a) axial unbewegbar angeordnet ist.

2. Elektromagnet (1) nach Anspruch 1,
**dadurch gekennzeichnet,**
**dass** die Mittel mindestens eine Leitung umfassen, die den ventilseitig an der ersten Ankerfläche (5a, 5b) anliegenden Druck an eine der ventilseitigen, ersten Ankerfläche (5a, 5b) entgegenwirkenden zweiten Ankerfläche (8a, 8b) leitet, so dass ein Gegendruck, der gegen den ventilseitig anliegenden Druck wirkt, realisiert ist.

3. Elektromagnet (1) nach Anspruch 1 oder 2,
**dadurch gekennzeichnet,**
**dass** die mit dem Gegendruck beaufschlagbare zweite Ankerfläche (8a, 8b) im Wesentlichen so ausgebildet ist, dass diese in axialer Richtung eine im Wesentlichen gleichgroße Fläche aufweist, wie die mit dem Druck beaufschlagte ventilseitige, erste Ankerfläche (5a, 5b), um den Druckausgleich des Ankers (3) zu realisieren.

4. Elektromagnet (1) nach einem der vorherigen Ansprüche 1 bis 3,
**dadurch gekennzeichnet,**
**dass** die Leitung als längs koaxial durch den Anker (3) verlaufende gerade Durchgangsöffnung (4) ausgebildet ist, um den Druckausgleich zu realisieren.

5. Elektromagnet (1) nach einem der vorherigen Ansprüche 1 bis 4,
**dadurch gekennzeichnet,**
**dass** die Rückstellvorrichtung (9) als Druckfeder ausgebildet ist, die in einem zugleich als Druckraum dienenden Freiraum (7) zwischen Gehäuse (2) und Anker (3) angeordnet ist, um eine aus Federkraft und dem in dem Freiraum (7) herrschenden Gegendruck in dem Freiraum (7) resultierende Kraft auf den Anker (3) zu übertragen.

6. Druckventil, insbesondere ein vorgesteuertes Proportional-Magnetventil, umfassend mindestens einen Elektromagneten (1) nach einem der Ansprüche 1 bis 7, um ein druckausgeglichenes Druckventil zu realisieren.

## Claims

1. A solenoid (1) for switching a pilot-controlled pressure valve, comprising a housing (2) for accommodating at least one electric coil (6) for generating a magnetic field, in which a linearly moveable armature (3) is arranged having two separate, axially opposite armature surfaces (5a, 5b; 8a, 8b), and cooperating with a return apparatus (9), wherein the armature (3) closes or opens a valve seat of a pressure valve cooperating with the solenoid (1), wherein the return apparatus (9) acts on the second armature surface (8a, 8b) by exerting a compensation force for pressure compensation at the armature (3), for which purpose the armature (3) has at least a two-part construction, and comprising a pre-pressurizing armature part (3b) axially moveable within the magnetic field, and a working pressure armature part (3a) at least partially surrounding the pre-pressurizing armature part (3b) and connected to the pre-pressurizing armature part (3b) in an axially fixed manner, wherein the pre-pressurizing part (3b) and the working pressure armature part (3a) each have at least one passage (4a, 4b),
**characterised in that**
the pre-pressurizing armature part (3b) is at least partially arranged in the passage (4a) in an axially fixed manner for pressure compensation of the working pressure armature (3a).

2. The solenoid (1) according to claim 1,
**characterised in that**
the means comprise at least one conduit that guides the pressure applied to the armature surface (5a, 5b) on the valve side, to a second armature surface (8a, 8b) acting in an opposed direction to the first armature surface (5a, 5b), so that a counterpressure is realized acting against the pressure applied on the side of the valve.

3. The solenoid (1) according to claim 1 or 2,
**characterised in that**
the second armature surface (8a, 8b) to which the counterpressure can be applied is essentially formed in such a way that it has a surface in the axial direction that has essentially the same size as the valve-side first armature surface (5a, 5b) to which the pressure is applied, in order to realize the pressure compensation of the armature (3).

4. The solenoid (1) according to any one of claims 1 to 3,
**characterised in that**
the conduit is formed as a straight passage (4) longitudinally and coaxially extending through the armature (3) in order to realize the pressure compensation.

5. The solenoid (1) according to any one of claims 1 to 4,
**characterised in that**
the return apparatus (9) is formed as a pressure spring arranged in a free space (7) between the housing (2) and the armature (3) and acting as a pressure cavity to transmit a force resulting from the spring force and the counterpressure present in the free space (7), to the armature (3).

6. A pressure valve, in particular a pilot-controlled proportional solenoid valve, comprising at least one solenoid (1) according to any one of claims 1 to 7, in order to realize a pressure-compensated pressure valve.

## Revendications

1. Électroaimant (1) pour commuter une soupape à pression pilotée, comprenant un boîtier (2) pour recevoir au moins une bobine électrique (6) destinée à générer un champ magnétique, dans lequel est agencé un induit (3) mobile de façon linéaire, qui présente deux surfaces d'induit subdivisées (5a, 5b ; 8a, 8b) axialement opposés et qui coopèrent avec un dispositif de rappel (9), dans lequel l'induit (3) ferme ou ouvre un siège de soupape d'une soupape à pression coopérant avec l'électroaimant (1), dans lequel, pour compenser la pression sur l'induit (3), le dispositif de rappel (9) agit avec une force de compensation conjointement sur la seconde surface d'induit (8a, 8b), ce pourquoi l'induit (3) est réalisé au moins en deux parties avec une partie d'induit à pression pilote (3b) déplaçable axialement dans le champ magnétique et une partie d'induit (3a) à pression de travail, qui entoure au moins partiellement la partie d'induit à pression pilote (3b) et est reliée sans possibilité de déplacement axial à la partie d'induit à pression pilote (3b), dans lequel la partie d'induit à pression pilote (3b) et la partie d'induit à pression de travail (3a) comportent chacune au moins une ouverture traversante (4a, 4b),
**caractérisé en ce que** la partie d'induit à pression pilote (3b) est agencée sans possibilité de déplacement axial au moins partiellement dans l'ouverture traversante (4a) pour la compensation de pression de la partie d'induit à pression de travail (3a).

2. Électroaimant (1) selon la revendication 1,
**caractérisé en ce que** les moyens comprennent au moins une conduite qui amène la pression appliquée côté soupape à la première surface d'induit (5a, 5b) vers une seconde surface d'induit (8a, 8b) qui agit à l'encontre de la première surface d'induit (5a, 5b) côté soupape, de sorte qu'il se produit une contrepression qui agit à l'encontre de la pression appliquée du côté soupape.

3. Électroaimant (1) selon la revendication 1 ou 2,
**caractérisé en ce que** la seconde surface d'induit (8a, 8b) soumise à la contrepression est sensiblement réalisée de telle façon que celle-ci présente en direction axiale une surface sensiblement égale à la première surface d'induit (5a, 5b) du côté soupape, sollicitée avec la pression, afin de réaliser la compensation de pression de l'induit (3).

4. Électroaimant (1) selon l'une des revendications précédentes 1 à 3,
**caractérisé en ce que** la conduite est réalisée sous forme d'une ouverture traversante (4) rectiligne qui s'étend en longueur coaxialement à travers l'induit (3), afin de réaliser la compensation de pression.

5. Électroaimant (1) selon l'une des revendications précédentes 1 à 4,
**caractérisé en ce que** le dispositif de rappel (9) est réalisé sous forme de ressort de compression qui est agencé dans un espace libre (7) entre le boîtier (2) et l'induit (3) qui sert simultanément de chambre de pression, afin de transmettre à l'induit (3) une force qui résulte de la force du ressort et de la contrepression qui règne dans l'espace libre (7).

6. Soupape à pression, en particulier soupape magnétique proportionnelle pilotée, comprenant au moins un électroaimant (1) selon l'une des revendications 1 à 7, afin de réaliser une soupape à pression compensée en pression.
